# EUROPEAN PATENT APPLICATION

(11) **EP 4 216 670 A1**
(43) Date of publication of application: **26.07.2023**
(21) Application number: 22152799.7
(22) Date of filing: 21.01.2022
(51) Int. Cl.: H05B 6/64, B23K 26/21, F24C 15/00

(54) **METHOD OF MANUFACTURING A MULTI-COMPONENT PART OF A HOUSEHOLD AND/OR COOKING APPLIANCE**

(71) Applicant: ELECTROLUX APPLIANCES AKTIEBOLAG, 105 45 Stockholm (SE)
(72) Inventor: BÖCKLER, Marco, 91541 Rothenburg ob der Tauber (DE); WIESINGER, Richard, 91541 Rothenburg ob der Tauber (DE); EHNINGER, Christian, 91541 Rothenburg ob der Tauber (DE); WITTMANN, Michael, 91541 Rothenburg ob der Tauber (DE)
(74) Representative: Electrolux Group Patents

(57) **Abstract**

The underlying invention is in particular related to a method of manufacturing a multi-component part (1) of a cooking and/or household and/or kitchen appliance, the multi-component part (1) comprising a first component (2) and a second component (3) wherein the first and second components (2, 3) are interconnected by a substance-to-substance bond (4).

## Description

The underlying invention is related to a method of manufacturing a multi-component part of a household appliance and/or cooking appliance. The underlying invention is further related to a household appliance, in particular a cooking appliance, comprising a multi-component part manufactured according to the method.

### Background

Household appliances, such as cooking ovens, often comprise multi-component parts joint or welded together from two or more components. Household appliances, such as cooking ovens, often include cavities, frames, or other components for accommodating or housing components. The cavities, frames, or components are often made from metal and are at least in part covered by an anti-corrosive layer, such as an enamel layer. In particular, ovens such as cooking ovens and/or microwave ovens comprise a coking cavity or chamber for receiving foods to be treated, wherein the cavity, specifically the inner walls of the cavity defining and surrounding the cooking chamber, are coated with an enamel layer. The enamel acts as an anticorrosive layer and provides an easy-to-clean surface.

A cooking cavity is in general defined by cavity walls and a front opening closed by a door, together surrounding the cooking chamber. A cavity for a microwave oven is described for example in EP 3 722 674 A1. In EP 3 722 674 A1, the cavity is made of steel and the inner sides of the cavity walls, i.e. the walls facing the cooking chamber, are provided with a protective enamel layer.

In microwave ovens, microwaves generated by a microwave source are generally fed to the cooking chamber via a waveguide system, representing a functional component attached to the cavity. In such systems, the microwave source feeds the microwaves to the waveguide system, and the microwaves are fed into the cooking chamber via the waveguide system.

In connection with enamelled cavity walls, the enamel coating may be applied to a component part of the cavity before mounting other components, such as the waveguide system. The reason for enamelling the cavity components before mounting or attaching other components is that such components, e.g. a waveguide system, as such do not necessarily have to be coated with enamel. Further, coating a multi-component part (cavity and waveguide system) with enamel is comparatively complex, wherein the smaller the component, the easier the coating process.

For interconnecting components of household appliance where one of the components is partially enamelled, e.g. for connecting a waveguide system or other functional component to a partially enamelled cavity wall, different technologies may be used including joints via screwing, riveting, via brackets and/or tabs for mechanical connection.

### Description of embodiments according to the invention

It is an object of the invention to provide an improved method for manufacturing a multi-component part of or for a household and/or cooking appliance. Further, a household and/or cooking appliance including such a corresponding multi-component part shall be provided.

This object is solved by a method and a household and/or cooking appliance according to the independent claims. Embodiments result from the dependent claims and the exemplary embodiments and examples described below.

According to the invention, a method of manufacturing a multi-component part of or for a household appliance is provided. The method provides a possibility for attaching a second component part to a first component part to form a multi-component part, with the first component part being partially covered with an anticorrosive layer, such as an enamel layer, before attaching the second component part via a substance-to-substance joint, e.g. a welding and/or brazing bond or joint. By this, it is not required to coat more than necessary with the anticorrosive material. Further, not more than necessary need be coated. Further, the components or parts to be coated before assembly are smaller and less complex as compared to the assembled multi-component part, which facilitates the coating process.

According to an embodiment, a method of manufacturing a multi-component part of or for a cooking and/or household and/or kitchen appliance is provided. The cooking and/or kitchen appliance may be for household or industrial application. In particular, the multi-component part is intended as a component of the appliance. The appliance may for example be an oven, such as a baking, cooking, and/or microwave oven, in particular a multifunctional oven including steam, radiant and/or microwave heating capabilities. The multi-component part may for example be or be related to an oven cavity. However, other components of appliances may be envisaged such as frames, housings, support structures and others.

The multi-component part may comprise two or more components, i.e. at least two component parts. For the ease of understanding, the following description will refer to two components only. However, the below description and claims apply to multi-component parts having more than two components. For example, a multi-component part may include several component parts, where at least two of the component parts, i.e. two, three etc. or even all components parts, are interconnected in accordance with a method according to the invention.

In particular the multi-component part may comprise a first component and a second component. In accordance with the method, the first and second components are interconnected via a substance-to-substance joint or bond, established for example by welding and/or brazing. The substance-to-substance bond may include a laser-joining technique such as laser welding or laser brazing.

The method comprises a step a) of providing the first component, with the first component comprising on a first side a first bonding area defined by an overlay of (at least) two interconnected metal layers with a gap (or: gapped interspace) being provided between the two metal layers in the first bonding area. This means that the bonding area comprises a two-layered (or: multi-layered) structure with (at least) two overlapping layers, the layers spaced apart by the gap substantially over the whole bonding area. The layers are metal layers, meaning that each of the layers is formed from metal. The layers may be part of or may be of sheet metal, a metal strip, metal ring or metal washer. The layers are provided in an overlapping arrangement, preferably in complete overlap, defining the first bonding area. The first component comprises at least one coating area. The coating area is preferably provided on a second side of the first component, with the second side being averted from the first side and opposite to the first bonding area. This means, that the coating area is arranged on a side that is opposite the first bonding area. The coating area is coated with an anticorrosive layer, in particular an enamel layer. The elements of the layers may be joined or bonded to each other, for example via a substance-to-substance bond or joint. For example, the elements of the layers may be interconnected by welding or brazing, in particular laser welding or laser brazing. The elements of the two layers are interconnected before the anticorrosive layer is applied. This means that the layers are interconnected before the coating area on the second side is coated with the anticorrosive layer. By this, it can be avoided that the process of interconnecting the two layers or the components of the layers, e.g. by (laser) welding and/or brazing, negatively affects the anticorrosive layer (or: coating). For example, the bonding energy applied to the layers may negatively affect the anticorrosive laser, e.g. enamel layer, and case defects or degradation. Therefore, the manufacture of the two- or multi-component part as suggested herein comprises at least two manufacturing steps, a first step of interconnecting the elements that finally make up the two-layered (or multi-layered) structure, and a subsequent second step of coating the coating area with the anticorrosive layer.

The coating area may for example relate to sections or sides of the first component that are required to be protected. For example, the coating area may correspond to the inner side of an oven cavity to be coated with an enamel layer acting as an anticorrosive layer and providing an easy-to-clean surface. The first side, comprising the first bonding area, may for example be related to a section of the multi-component part located at or on the outer side of an oven cavity. Further, the first side may relate to an outer side provided for attaching a functional component such as waveguides in microwave ovens. Respective first sides and bonding areas may not require protection in the form of an enamel coating layer.

The method comprises a second step b) of providing the second component, wherein the second component comprises a second bonding area.

The first and second bonding area, respectively, may be located in or on a surface of the first or second component, e.g. an outer and/or plain surface region, on or at an edge or rim of the component, and/or on or at a (lateral) face side of the component. For example, the first bonding area may be provided in a plain surface section of the first component, and the second bonding area may be provided at or on an edge or face side of the second component. The bonding areas may be substantially parallel to each other, e.g. for establishing an overlap joint, or the bonding areas may be inclined, in particular perpendicular, to each other, e.g. for establishing an edge joint.

The method comprises a third step c) of positioning the second bonding area at or on the first bonding area. This positioning is intended and may be carried out such that the bonding areas are appropriately positioned relatively to each other, and such that the two component parts can be interconnected in a substance-to-substance bond or joint (immediately) after the positioning. The positioning is in particular carried out such that the areas to be bonded together are arranged at or next to each other as required for establishing a substance-to-substance bond, e.g. a welded or brazed seam.

The method comprises a fourth step d) of joining the first and second component by providing a first substance-to-substance bond between the first and second bonding area. The joining comprising applying bonding energy to the first and second bonding areas from the first side. As mentioned, the substance-to-substance bond may comprise welding and/or brazing, in particular laser welding or brazing.

By applying the bonding energy from the first side, i.e. from or on the side averted from the anticorrosive layer on the second side, the anticorrosive layer can be prevented from direct exposure to bonding energy, and corresponding damages to the anticorrosive layer or defects induced by direct exposure with bonding energy may be avoided.

Regarding welding or brazing, in particular laser welding or brazing, the second component part may be bonded to the first component part substantially without negatively affecting the anticorrosive layer, such as an enamel layer.

The suggested method is further effective in avoiding damages and deteriorations to the anticorrosive layer in that the first bonding area includes a double- or multi-layered structure, and in that there is provided a gap, in particular an air gap, between the overlay of layers of the layered structure. By this, i.e. by the multi-layered structure and/or the gap, the thermal conductivity of the first component part can be reduced at least in the region of the first bonding area as compared to a uniform, monolithic, or one-layered component part without gap. The reduced thermal conductivity is efficient for shielding the anticorrosive layer, e.g. an enamel layer, from bonding energy and bonding heat, in particular to the extent needed for avoiding damage or deterioration of the anticorrosive layer.

The suggested method therefore enables the manufacture of a multi-component part for a household appliance from two (or more) component parts with one of the component parts being partially covered with an anticorrosive layer, in particular an enamel layer, before interconnecting the component parts of the multi-component part. In particular, an enamel layer may be applied to the first component part as required, e.g. on a side constituting the inner side of an oven cavity. The second component, e.g. a functional component, may be welded to the outer side, not covered by an enamel or anticorrosive layer.

Enamelling or coating the first component part before attaching the second component may be advantageous with regard to manufacturing efficiency, and with regard to applying the coating as such, because the smaller the component the smaller the effort for applying the coating.

In embodiments, the step a) of providing the first component may comprise as a first sub-step a1) establishing the first bonding area by interconnecting the two layers, e.g. at the first side, with a second substance-to-substance bond. The second substance-to-substance bond may comprise welding and/or brazing, in particular laser welding and/or brazing. Further, the second substance-to-substance bond may comprise, similar as the first substance-to-substance bond, one or more bonding lines and/or bonding spots, for example, such as welding or brazing lines or spots. Yet further, the second substance-to-substance bond may be established at a distance from the intended location of the first substance-to-substance bond. Specifically, the second substance-to-substance bond may be located outside the first bonding area. In particular, the first and second substance-to-substance bonds may be provided such that they are spaced apart from each other in the finally assembled multi-component part.

Further, the step a) of providing the first component may comprise a second sub-step a2), carried out after the first substep a1), comprising coating the coating area with the anticorrosive layer, such as an enamel layer. This means, that the bonding area is first established and, thereafter, the anticorrosive layer is provided or applied. By this, the anticorrosive layer need not be exposed to high temperatures generated in the course of establishing the double or multi-layered first bonding area, for example by welding of brazing the two or more layers together.

In embodiments, the gap may be, at least in part, an air-gap. This means that two layers of the first bonding area may be spaced apart with the gap filled with air. The air gap may provide a thermal barrier reducing or inhibiting the transfer of heat generated in the course of establishing the substance-to-substance bond for interconnecting the first and second component. The air gap may therefore be considered as a thermal barrier shielding the anticorrosive layer on the second side from heat present at the first bonding area during the joining process. The heat barrier may avoid heat-induced damage or degradation of the anticorrosive laser, such as an enamel layer.

On a note, enamel layers as applied on component parts of household and/or cooking appliances are generally not resistant to the energy or heat generated by welding or brazing for interconnecting metal component parts. The layered structure and/or the gap as proposed by the invention make it possible, by providing a thermal shield or barrier, to interconnect component parts by welding, brazing, or similar techniques without damaging or degrading the enamel layer, which is provided on one of the component parts on a side averted from the bonding area.

In embodiments, the gap in the first bonding area may be established by means of at least one spacer or spacer section. The spacer section may be located outside the first bonding area. The spacer or spacer section may be configured for keeping at least two consecutive metal layers of the first bonding area at a distance from each other. In particular, the spacer may be configured such that the gap between the metal layers is established.

In embodiments, the spacer or spacer section may be provided as at least one of:
- a projection, protrusion, or bulge provided on a side of the metal layers facing each other, wherein the projection, protrusion, or bulge is preferably formed integral with one of the metal layers;
- a chamfer provided at an edge of one of the metal layers and oriented towards an immediately adjacent metal layer.

The spacer or spacer section may be integral with one of the metal layers, or may be provided, in particular attached, as an additional component to one of the layers.

In embodiments, the gap may be established by a bending of at least one of the layers. The bending may cause an interspace between at least two consecutive metal layers of the first bonding area when the layers are put on each other. The bending may for example be provided on or at an edge of one of the layers, whilst the reminder of the layer or of the first bonding area may be substantially planar or smooth, or may have a shape specifically adapted for attaching the second component.

In embodiments, one of the metal layers may be provided as a metal sheet, and the other metal layer provided immediately adjacent to the metal sheet on the first side may be formed as a linear, curved, in particular circular, sheet metal band or strip, for example in the form of a sheet strip or washer. In case that the other metal layer is provided as a sheet metal band, the first bonding area may be provided on or at the sheet metal band. Therefore, the first bonding area may be established in a straightforward way by joining the sheet metal band, sheet strip, or washer to a metal sheet, plate or wall, e.g. by welding or brazing, and after that, the coating area may be coated with the anticorrosive layer.

In embodiments, the method may comprise, before joining the first and second component, cleaning at least one of the first and second bonding area substantially to bare metal. For example, the cleaning may remove dirt, cinder, enamel or other contaminants unintentionally present in a respective bonding area.

The cleaning may be carried out with a contactless cleaning tool and/or a contact-based cleaning tool. The contactless cleaning tool may for example comprise a laser source for generating a laser beam, with the removing comprising irradiating the first and/or second bonding area with the laser beam. The contact-based cleaning tool may for example comprising an abrading, grinding and/or blasting tool.

In embodiments, the first component may be a part of a cavity or frame of a household or kitchen appliance, and the second component may be a functional component for mounting to the part of the cavity, the cavity, or to the frame. The functional component may for example be a microwave waveguide, inlets and outlets, and others. The first component may be a cavity or cavity wall of a cavity of a microwave oven or a multifunctional oven. Based on the suggested method according to steps a) to d), the waveguide may be attached by (laser) welding or brazing to an outer side of a wall of the cavity, with the inner side of the cavity being coated with enamel. Using (laser) welding or brazing, and cleaning (e.g. also using a laser), the waveguide or other components may be easily attached to the first component, in particular such that the area of connection is tight with regard to leakage or escape of microwaves.

In embodiments, the cavity may be configured for heating objects via high-frequency radiation, such as radio-frequency and/or microwave radiation. The functional component may be a waveguide section. The cavity may comprise a cavity wall with a waveguide opening for feeding therethrough high frequency radiation in the radio-frequency and/or microwave range supplied via the waveguide section attached to the cavity wall into the cavity. The high frequency radiation may be generated by one or more radiation generators, such as microwave or radio-wave generators, comprised by the appliance. The first bonding area may be established on an outer side, i.e. a side averted from the cavity interior, around the waveguide opening. The second bonding area may be established at the waveguide section, and may adjoin the waveguide opening once connected to the cavity wall. The second bonding area ma overlap with the first bonding area, and oriented parallel and/or inclined relative to the first bonding area.

In this connection, the method may comprise a step of positioning the waveguide section at the waveguide opening with the second bonding area of the waveguide section being placed in alignment with the first bonding area, and the further subsequent step of establishing the substance-to-substance bond between the first and second bonding areas.

In embodiments, the thickness of the first component in the region of the overlay, i.e. in the region of the double- or multi-layered structure, may be in the range between 0.8 mm and 2.0 mm, preferably from 1.3 mm to 1.4 mm. The thickness of the first component outside the overlay, i.e. outside the area of the overlay, may be in the range between 0.3 mm to 1.0 mm, preferably from 0.5 mm to 0.6 mm. Such dimensions in particular are suitable for manufacturing cavities of microwave ovens or multifunctional ovens including but not restricted to a microwave functionality. However, these dimensions are also suitable for manufacturing any kind of cavities or structural elements of ovens or other household and/or kitchen appliances.

In embodiments, a width of the first bonding area, when measured perpendicular to its path on first component and parallel to the overlay, may be substantially constant. In general, the width of the first bonding area may be adapted to the joining or bonding technique and may have a minimum width suitable for establishing a bond, e.g. via laser welding and/or laser brazing. The first bonding area may have a width, in particular a minimum or constant width, in the range from 0.5 cm to 2.0 cm, specifically in the range from 0.8 cm to 1.5 cm, more specifically of about 1.0 cm.

In embodiments, the substance-to-substance bond may be established by a contact-based joining technique such as brazing or welding (e.g. wire-feed welding etc.) and/or a contactless joining technique, such as laser welding or laser brazing. In particular, the suggested first bonding area including the multi-layered structure is particularly suitable for welding/brazing, in particular laser welding/brazing, because the thermal barrier generated by the layered structure and/or the gap is advantageous for shielding the anticorrosive layer, such as an enamel layer, from the heat generated by the welding/brazing. By this, damages or defects in the anticorrosive layer may be avoided.

In embodiments, the method may comprise supervising at least one of the method steps by a computer-based supervision system, the supervision system comprising a control unit for controlling in an at least semi-automated manner, at least one of the positioning of the second bonding area at or on the first bonding area, the cleaning of the first and/or second bonding area, and the joining of the first and second component. The supervising system may comprise a visual system, preferably comprising a camera tracking module, for visually inspecting the operation according to at least one of the method steps. Such a supervising system has the advantage of obtaining excellent interconnections, and may be suitable for avoiding damages or defects in the anticorrosive layer, e.g. because the supervising system may evaluate the joining step and determine a suitable speed or energy for joining so as to avoid overheat in the joining region and damages or defects in the anticorrosive layer, such as enamel. Further, the supervising system may enhance the accuracy of the joint, which may be of advantage for obtaining microwave-tight interconnections, for example. In addition, the supervising system may be used for automating the manufacture.

In embodiments, a household or kitchen appliance, in particular a cooking appliance such as a cooking oven for cooking food, is provided, comprising a multi-component part manufactured according to a method according to an embodiment according to the invention as described herein.

In embodiments, a household or kitchen appliance, in particular a cooking appliance, is provided, comprising a cavity and/or frame, and a functional component. The cavity and/or frame and the functional component are interconnected via a substance-to-substance joint obtained according to a method according to any embodiment according to the invention as described herein. The cavity and/or frame represent the first component, and the functional component represents the second component. The appliance preferably comprises one or more heating sources, one of the heating sources preferably being a radiation source for emitting high frequency radiation in the radio-frequency or microwave range. The functional component may be at least one waveguide section joined via the substance-to-substance bond or joint to a cavity wall such that radiation emitted from the radiation source is fed at least via the waveguide section into the cavity.

As already described further above, the method suggested herein is, in particular, suitable for joining a waveguide section to a cavity of an oven. The advantage of the method is, that the cavity (interior) may be enamelled before the waveguide section is attached, without damaging or degrading the enamel layer. By this, manufacture of the oven cavity may be improved and/or simplified. On a note, even though it is normally sufficient to provide the enamel layer on the inner side of the cavity, the method suggested herein is suitable for situations in which the whole first and second component are enamelled before being interconnected. In this case, the bonding areas required for and involved in attaching the second component and the first component to each other may be treated with a treating tool for removing the enamel (or other unwanted layers) before establishing the substance-to-substance bond. Such tools may be based on laser technology and suitable for removing outer layers of the components such that the bonding areas provide blank metal suitable for example for welding and/or brazing.

Accordingly, the method as suggested herein provides an improved way for manufacturing a multi-component part for a household and/or kitchen appliance, such as a cooking appliance. Further a corresponding appliance is provided that can be manufactured in a straightforward manner.

### Brief description of the drawings

Exemplary embodiments and aspects of the underlying invention will now be described in connection with the annexed figures. Albeit the exemplary embodiments may at least in part relate to a microwave oven, the underlying invention is not restricted to such appliances, and can be applied to any kind of appliance, for example intended for household and/or kitchen usage. In the figures:
- FIG. 1: shows a schematic view of a kitchen appliance in the form of a microwave oven;
- FIG. 2: shows a perspective rear view of a cavity of the microwave oven;
- FIG. 3: shows a further perspective rear view of the cavity;
- FIG. 4: shows a first schematic and partial representation of a multi-component part;
- FIG. 5: shows a second schematic and partial representation of a multi-component part;
- FIG. 6A: shows a first component of the multi-component part before applying an anticorrosive layer and before attaching a second component;
- FIG. 6B: shows the first component of FIG. 6A with the anticorrosive layer applied to the component;
- FIG. 7: shows the first component of FIG. 6 with a second component attached;
- FIG. 8: shows a plan view of an embodiment in accordance with FIG. 7;
- FIG. 9: shows a plan view of a further embodiment in accordance with FIG. 7;
- FIG. 10: shows a side view of an oven cavity comprising a waveguide attached to a cavity wall;
- FIG. 11: shows a process diagram of an embodiment of a method according to the invention; and
- FIG. 12, 13: schematically show different substance-so-substance joints suitable for use with a method according to the invention.

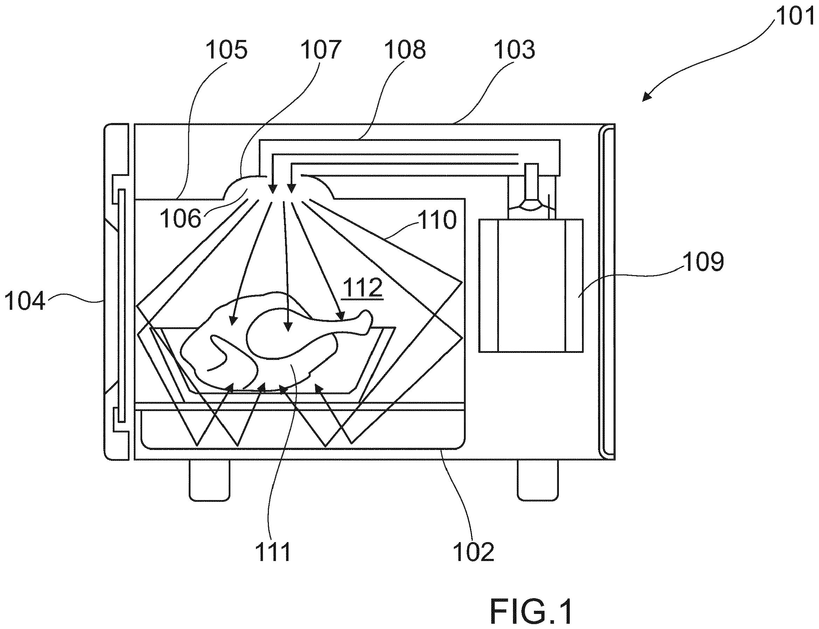

FIG. 1 shows a kitchen/household appliance 101, specifically a microwave oven 101. The oven 101 comprises a cavity 102 arranged within an outer housing 103, and a door 104 for closing a front opening of the cavity 102. On a top wall 105 of the cavity 102 a microwave feed-through 106 is provided, which is associated with a waveguide section 107. The waveguide section 107 is coupled via a hollow conductor 108 to a microwave generator 109. Microwaves 110 generated by the microwave generator 109 are coupled into the hollow conductor 108 and are feed through the waveguide section 107 into the cavity 102 for heating food 111.

As mentioned, the microwave oven and waveguide section are just illustrative examples for the underlying invention, and the invention may be applied and used with other appliances and other components.

The cavity 102 comprises several cavity walls surrounding a cooking chamber 112. The inner sides of the cavity walls facing the cooking chamber 112 are coated with enamel, i.e. with an enamel layer (not shown in FIG. 1). The enamel layer provides an anticorrosive layer, and also provides an easy-to-clean surface.

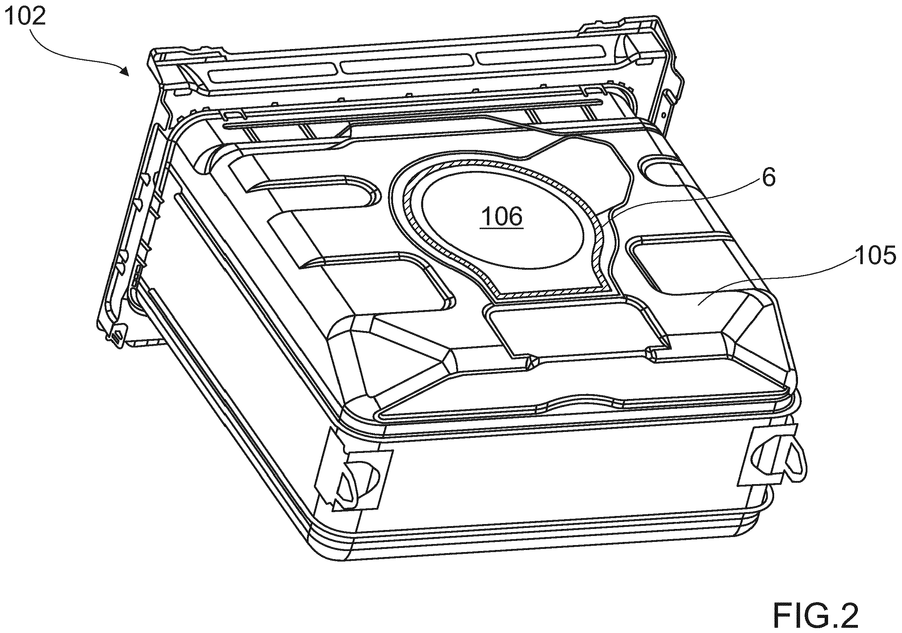

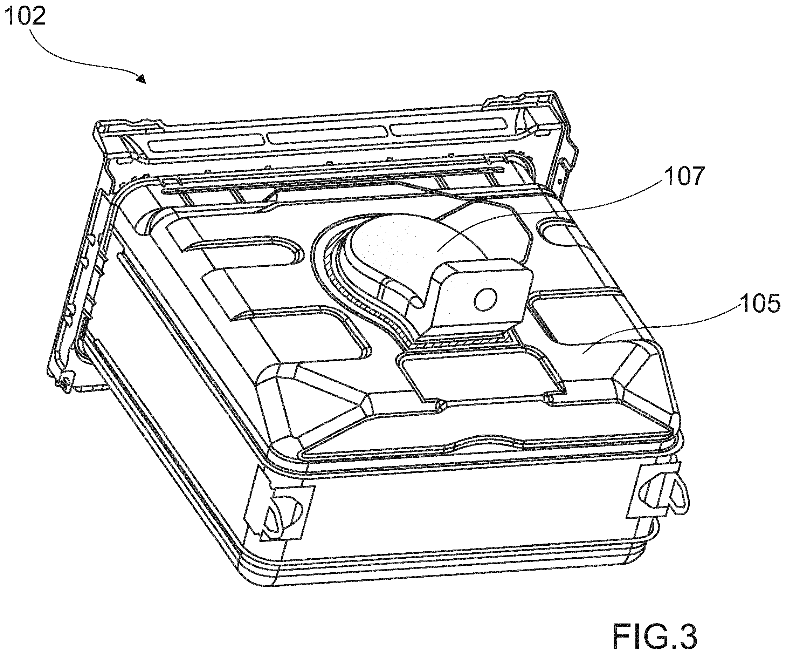

FIG. 2 shows the cavity 102 of the oven 101 of FIG. 1 in a perspective view from the back side. As can be seen, the microwave feed through 106 is associated with a hole provided in the top wall 105. Around the microwave feed through 106, at the rim thereof, a first bonding area 6 is provided, which as such will be described in further detail below. The first bonding area 6 is configured for attaching, in particular joining or bonding thereto, the waveguide section 107, as shown in FIG. 3.

FIG. 3 shows the cavity 102 of FIG. 2 with the waveguide section 107 mounted or attached to the cavity 102. The attachment, in particular bonding or joining, of the waveguide section 107 to the first bonding area 6 at the outer side of the top wall 105 of the cavity 102 is carried out according to a method according to the invention.

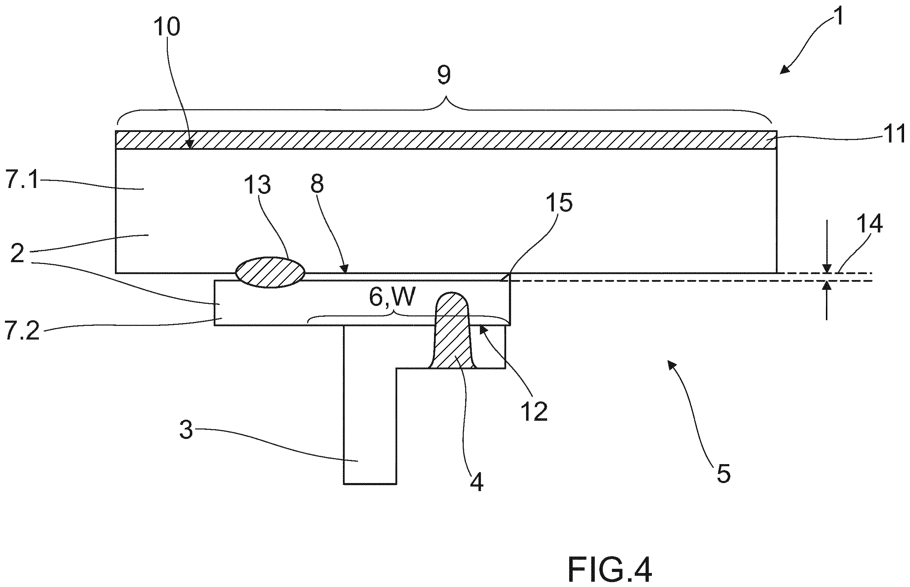

The attachment, boding or joining, is exemplified in connection with FIG. 4 showing a first schematic and partial representation of a multi-component part for an appliance. In the below description, the cavity 102 or cavity wall 105 can be associated with the first component 2, and the waveguide section 107 can be associated with the second component 3 together constituting a multi-component part 1 in accordance with a more general version of method according to the invention.

According to the invention, a method of manufacturing the multi-component part 1 is provided, wherein the multi-component part 1 comprises a first component 2, e.g. the cavity 102 or cavity wall 105, and a second component 3, e.g. the waveguide section 107.

The first and second components 2, 3 are interconnected by a substance-to-substance bond 4.

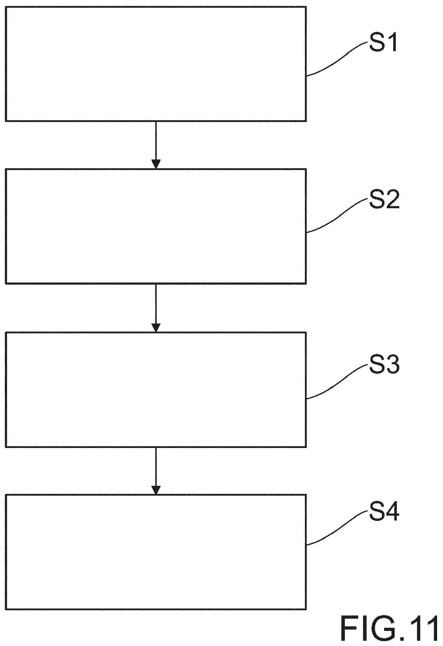

In a first step S1 (see FIG. 11) of the method, the first component 2 is provided. The first component 2 comprises on a first side 5 a first bonding area 6 defined by an overlay of at least two interconnected metal layers 7.1, 7.2.

A gap 8 is provided between the two metal layers 7.1, 7.2 in the first bonding area 6.

At least a coating area 9 on a second side 10 of the first component 2, averted from the first side 5 and opposite to the first bonding area 6, is coated with an anticorrosive layer 11. An anticorrosive layer 11 may be provided on other sections of the multi-component part 1 as required.

In the example microwave oven shown in FIG. 1 to 3, the second side 10 corresponds to the inner side of the cavity wall(s), and the first side 5 corresponds to the outer side of the cavity 102. The anticorrosive layer 11 is for example an enamel layer provided (substantially only) on the inner walls of the cavity 102.

In a second step S2 (FIG. 11), the second component 3 is provided. The second component 3 in terms of the microwave oven shown in FIG. 1 to 3 may correspond to the waveguide section 107.

The second component 3 comprises a second bonding area 12.

In a third step S3, the second bonding area 12 is positioned at or on the first bonding area 6, in particular such that the first and second components 2, 3 are in a position for being interconnected via a substance-to-substance bond/joint involving the bonding areas 6, 12. In particular, the first and second components 2, 3 may be arranged and positioned relative to each other such that the bonding areas 6, 12 overlap or are superimposed.

In a fourth step S4 (FIG. 11) the first and second components 2, 3 are joined together by providing a first substance-to-substance bond 4 between the first 6 and second bonding area 12 by applying bonding energy to the first and second bonding areas 6, 12 from the first side 5.

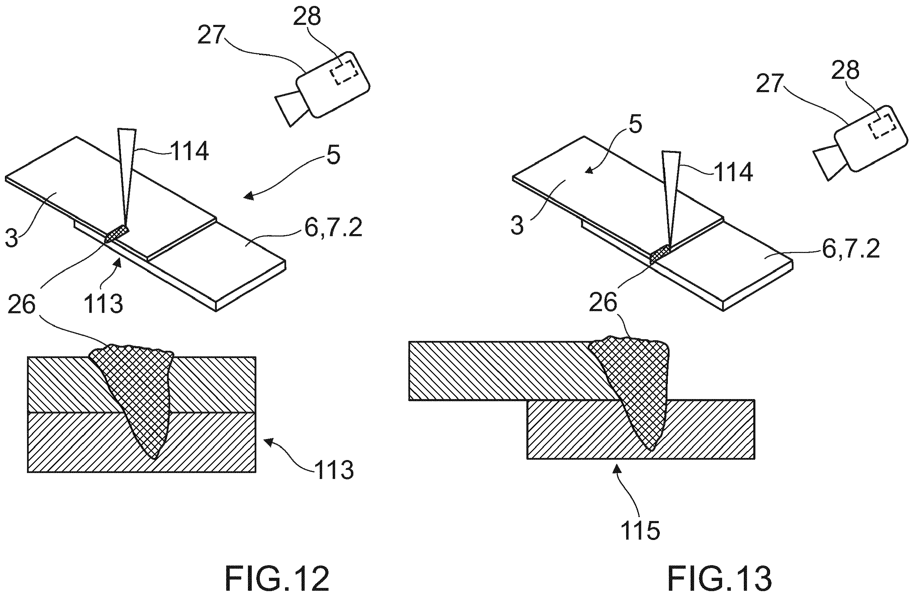

The substance-to-substance bond 4 may for example be established by laser welding or laser brazing. In the example of FIG. 4, the first substance-to-substance bond 4 is provided as an overlap bond or joint 113, with laser energy 114 being irradiated on the second component 3 from the first side to generate a fusion zone 26 interconnecting the first and second components 2, 3, which is shown schematically in more detail in FIG. 12.

Applying the bonding energy, e.g. laser energy, from the first side 5, and because the gap 8 acts as a thermal barrier, it can be avoided that the anticorrosive layer 11 is damaged or degraded through the bonding energy, e.g. laser energy. In general, enamel as an anticorrosive coating does normally not fully withstand high temperatures occurring during laser welding/brazing.

According to the invention, laser welding or laser brazing technology can be used even if one side of the to be joined components is coated with enamel before joining the components through welding/brazing. This in particular results in a more efficient manufacturing process.

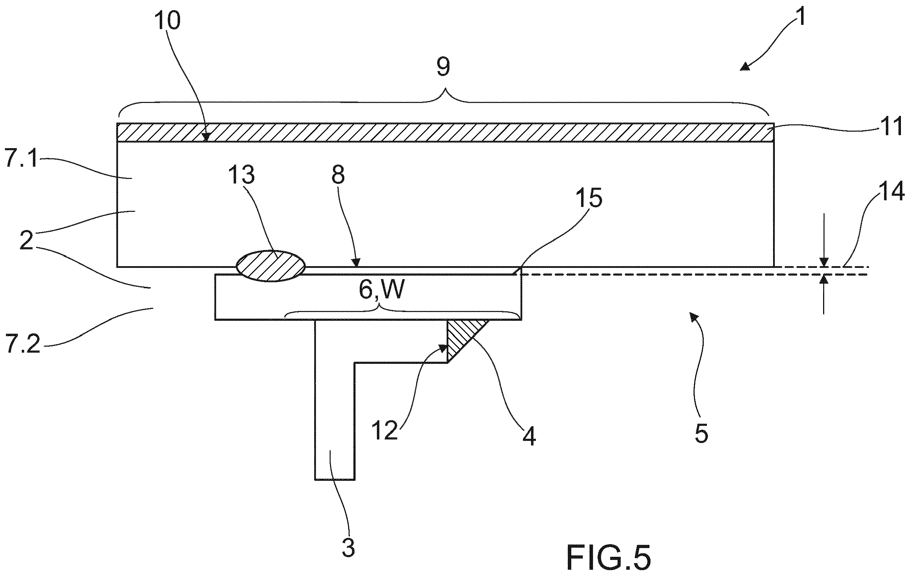

FIG. 5 shows a second schematic and partial representation of a multi-component part 1. This multi-component part 1 differs from the one in FIG. 4 in the type of the first substance-to-substance bond 4. In the example of FIG. 5, the first substance-to-substance bond 4 is an edge joint 115, which is generated at an edge of the second component 3. The edge joint 115 is schematically shown in more detail in FIG. 13.

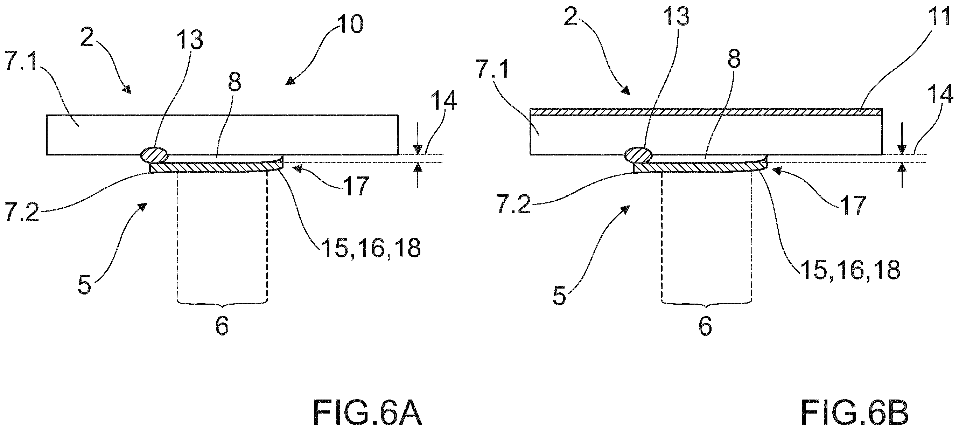

FIG. 6A shows the first component 2 of the multi-component part 1 before attaching the second component 3 and before coating the second side 10, i.e. the coating area 9, with the anticorrosive layer 11, e.g. before applying an enamel coating at the second side 10. The first component 2 and the multi-layer structure 7.1, 7.2 may be established as follows.

In a first step, the two elements constituting the multi-layered structure may be provided. For example, the cavity 102 or a wall (e.g. 105) of the cavity 102 may be provided and a section thereof may form the first layer 7.1. A metal strip, washer or similar may be provided to form the second layer 7.2 after interconnection. The two layers 7.1 and 7.2 are positioned over each other, and the first bonding area 6 is then established by interconnecting the two layers 7.1 and 7.2 at the first side 5 with a second substance-to-substance bond 13. The second substance-to-substance bond 13 may be a laser welding or laser brazing bond, in the example shown in FIG. 6 an overlap bond or joint, but may also be implemented as an edge bond 115 or joint (see FIG. 12). The shape and configuration of the second layer 7.2 may be selected according to actual needs. For example, if the first bonding area 6 is required to be circular, a washer or ring-shaped band may be used, and if the first bonding area 6 is required to be linear, a strip sheet or band may be used.

The first bonding area 6 is established through the multi-layered structure comprising the two layers 7.1 and 7.2 proximate to the second substance-to-substance bond 13. In the region of the first bonding area 6, the gap 8 is provided.

The gap 8 is established in that the second layer 7.2 is spaced a predetermined minimal distance 14 from the first layer 7.1. The distance 14 is selected such that the gap 8 acts as a thermal barrier for bonding energy or heat generated by bonding the second component to the first component. The value for the distance 14 or gap height may be chosen in dependence of the properties and material thickness of the first component 2, e.g. depending on the heat dissipation through the first component (first layer 7.1) when establishing the first substance-to-substance bond 4, e.g. if the first component comprises the anticorrosive layer 11 on the second side 9.

The distance 14 and gap 8 may be established by forming the second layer 7.2 in a suitable way, e.g. by providing a projection 15, chamfer 16, and/or bending 18 at an edge 17 of the second layer 7.2 averted from the location of the second substance-to-substance bond 13. Any other element suitable for providing a gap 8 between the two layers 7.1 and 7.2 may be provided, e.g. a spacer element 15 (see for example FIG. 5). The spacer element 15 or other elements for establishing the gap 8 may be provided at least in part at or on the second layer 7.2 and/or at least in part at or on the first layer 7.1. The gap 8 is implemented as an air gap, which has been proven sufficient to block bonding energy when establishing the first substance-to-substance bond 4, and to avoid degradation of the anticorrosive layer 11.

Coming back now to FIG. 6A, the first component 2 is provided with the first bonding area 6, which is defined by the multi-layered structure (7.1, 7.2). After that, the anticorrosive layer 11, e.g. an enamel layer, is applied to the second side 10, as shown in FIG. 6B. Providing the anticorrosive layer 11 after interconnecting the two layers 7.1, 7.2 or metal sheets (7.1, 7.2) to form the first bonding area has the advantage that establishing the second structure-to-structure bond 13, e.g. via welding, does not impair the anticorrosive layer 11.

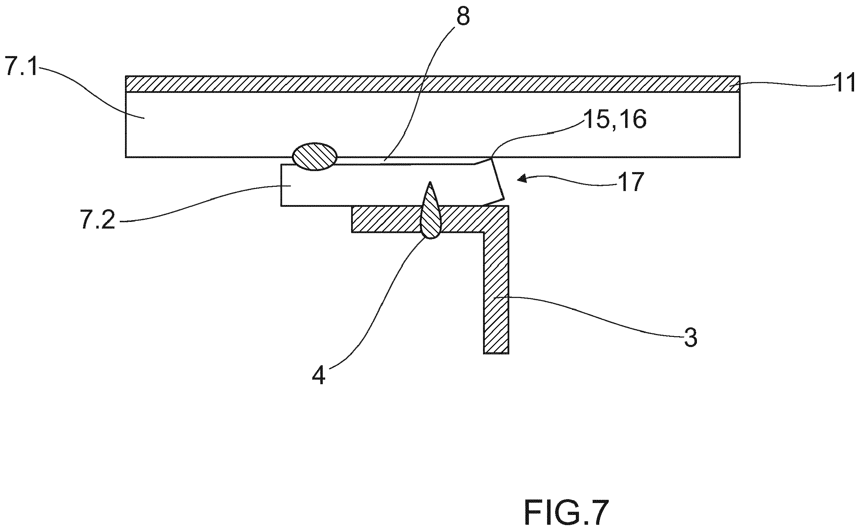

After forming the first bonding area 6 as described, the second component 3 is bonded to the first component 2, specifically in the first bonding area 6, which is shown in FIG. 7. The first and second substance-to-substance bonds 4, 13 may comprise one or more bonding lines and/or bonding spots.

As may be inferred from FIG. 7, the second substance-to-substance bond 13 is established at a distance from the intended location of the first substance-to-substance bond 4, in particular outside the first bonding area 6. By this, heat conduction towards the anticorrosive layer may be reduced when establishing the first substance-to-substance bond 4.

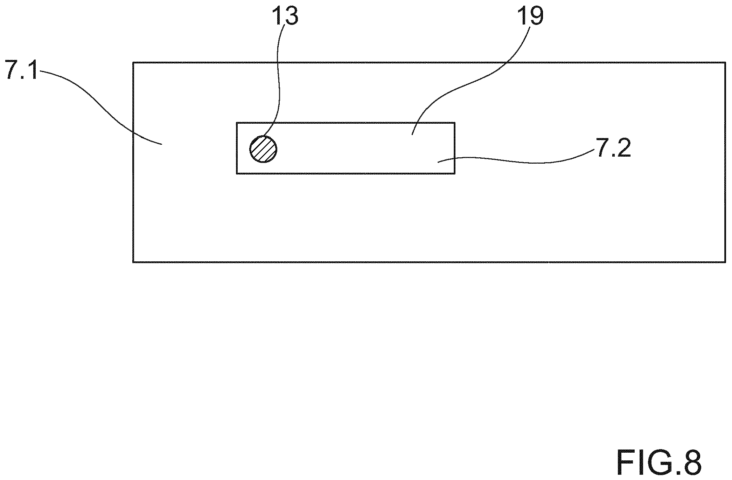

FIG. 8 shows a plan view of the embodiment in accordance with FIG. 7, wherein the second layer 7.2 is implemented as a strip, e.g. a linear metal sheet strip 19.

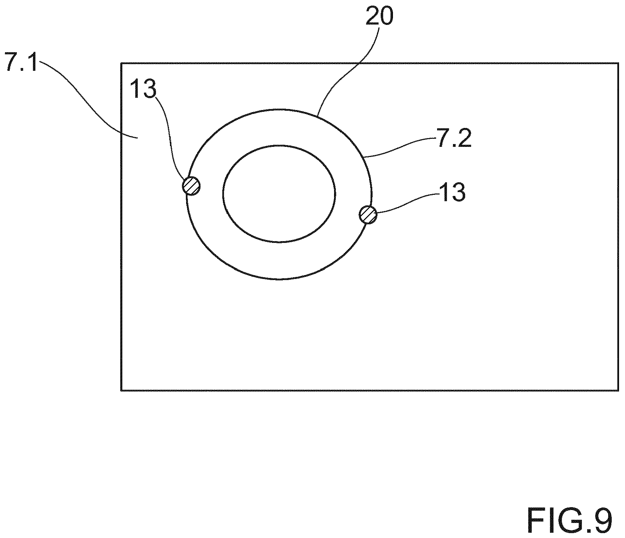

FIG. 9 shows a plan view of the embodiment in accordance with FIG. 7, wherein the second layer 7.2 is curved, specifically circular, e.g. in the form of or provided as a washer 20.

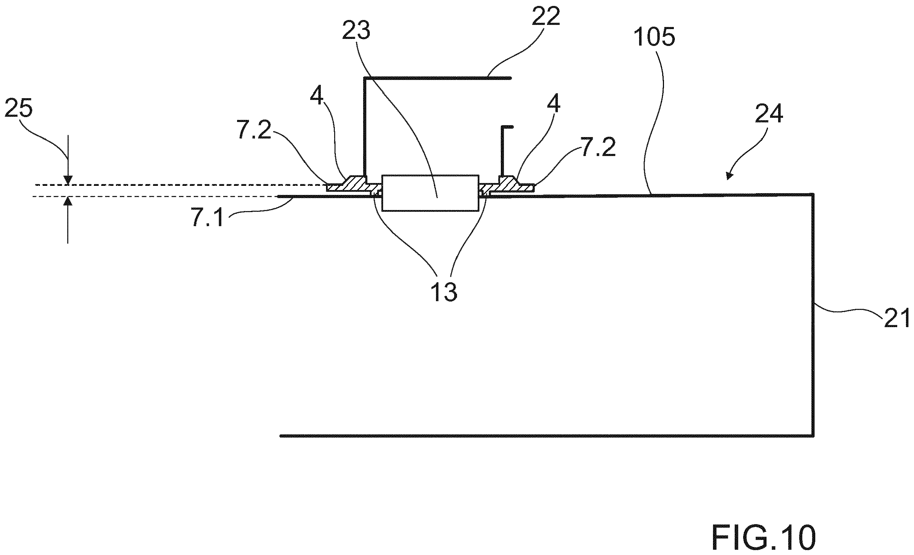

FIG. 10 shows a schematic side view of an oven cavity 21 of a microwave appliance comprising a waveguide or waveguide section 22 attached to a cavity wall, for example the top wall 105 of the cavity 21. The waveguide section 22 is attached to the cavity 21 such that a lower opening of the waveguide section 22 is aligned with a waveguide opening 23 provided in the cavity wall 105. The inner side of the cavity 21 is coated with an enamel layer, which is applied after establishing the layered structure comprising the first and second layers 7.1 and 7.2 attached to each other by welding involving in the second structure-to-structure bond 13. The waveguide section 22 is connected to the first bonding area 6 defined by the layered structure 7.1, 7.2 by laser welding at or on an outer side of the cavity 24 around the waveguide opening 23. The second structure-to-structure bond 13 may be implemented as an overlap bond or joint as shown in FIG. 12, and the first structure-to-structure bond 4 may be implemented as an edge joint 115 or edge bond as shown in FIG. 13.

Using laser welding or laser brazing for connecting the waveguide structure 22 to the cavity wall 105 has the advantage that the interconnection thus obtained, e.g. by a welding seam or brazing seam, may be provided such that the bonding area is tight with regard to microwaves generated during operation of the microwave oven. Microwave tightness may for example be obtained by providing a substantially continuous welded seam around the waveguide opening 23.

A thickness 25 of the first component 2, i.e. the cavity walls, in the region of the overlay of the layers 7.1 and 7.2 may be in the range between 0.8 mm and 2.0 mm, preferably 1.3 mm to 1.4 mm, and the thickness of the first component 2, e.g. the cavity walls, outside the overlay 7.1, 7.2, i.e. outside the multi-layered structure, may be in the range between 0.3 mm to 1.0 mm, preferably 0.5 mm to 0.6 mm.

In all of the above embodiments, connecting the two layers 7.1 and 7.2 to each other and/or connecting the second component 3 to the first component 2 may involve, before establishing the first and/or second substance-to-substance bond 4, 13, cleaning at least one of the first and second bonding area 6, 12 substantially to bare metal. Also the sections in the regions of the second substance-to-substance bond 13 may be cleaned accordingly.

The cleaning may be carried out with a contactless cleaning tool and/or a contact-based cleaning tool. For example, the contactless cleaning tool may comprise a laser source for generating a laser beam, wherein the cleaning includes irradiating the first and/or second bonding area 6, 12 with the laser beam to remove dirt, or other unwanted adhesions. A contact-based cleaning tool may for example comprise an abrading, grinding and/or blasting tool.

The width W (see FIG. 4, 5) of the first bonding area 6 when measured perpendicular to its path on first component 2 and parallel to the overlay of layers 7.1 and 7.2, i.e. parallel to the multi-layered structure, may be substantially constant, and may for example have a width W in the range from 0.5 cm to 2.0 cm, specifically in the range from 0.8 cm to 1.5 cm, more specifically of about 1.0 cm.

Coming now to FIG 12 and 13, the substance-to-substance bonds 4 and 13, when implemented for example as laser-welded or laserbrazed bonds, may be provided as overlap bonds (joints) as shown in FIG. 12, or as edge bonds (joints) as shown in FIG. 13. In particular, the first structure-to-structure bond 4 may be provided as an edge joint 115. As shown in the lower parts of FIG. 12 and 13, the bonds or joints provide fusion zones 26 interconnecting both material layers. Laser energy is applied such that the fusion zone 26 has an interface width and penetration depth sufficiently large to provide a firm connection between the components/layers. The interface width and penetration depth may be adapted by selecting the boding energy applied, for example, and may be adapted to respective needs, e.g. a required bonding strength. On a note, the representations in FIG. 12 and 13 do not show a gap 8, but such a gap 8 is provided in case that the first and second layers 7.1 and 7.2 are to be connected to form the multi-layered structure.

As shown in FIG. 12 and 13, the method may comprise supervising at least one steps e.g. S1 to S4 (FIG. 11) for manufacturing the multi-component part 1 with a computer-based supervision system 27. The supervision system 27 may comprise a control unit 28 for controlling in an at least semi-automated manner, at least one of the steps, e.g. S1 to S4 or others, in particular the positioning of the second bonding area 12 at or on the first bonding area 6, the cleaning of the first and/or second bonding area 6, 12, and the joining of the first and second component 2, 3, wherein the supervising system preferably comprises a visual system 27, 28, preferably comprising a camera tracking module 27, for visually inspecting the operation according to at least one of the method steps carried out for manufacturing the multi-component part 1.

On a note, a cleaning step may be carried out at respective sites of the layers 7.1 and 7.2 before establishing the first and/or second structure-to-structure bond 4, 13.

Regarding the bonding areas 6 and 12, there are several possibilities for their mutual arrangement. For example, the first bonding area 6, which is facing away from the first component 2, and the second bonding area 12 at the second component 3 may face each other, e.g. for establishing an overlap bond as exemplarily shown in FIG. 4, 7, and 12. Alternatively, the second bonding area 12 may be oriented inclined, e.g. substantially perpendicular, to the first bonding area 6, for example in case that the first structure-to-structure bond 4 is to be established as an edge joint or bond 115 , as exemplarily shown in FIG. 5 and FIG 13. It is to be noted that the first and second components 2, 3 may be interconnected by establishing both an overlap and an edge bond 115, if for example the required bonding strength so requires.

The above description of exemplary embodiments shows that the underlying invention provides the advantage of improved and/or simplified assembly or manufacture of a multi-component part of or for a household or cooking appliance, in particular an appliance requiring one or more surfaces to be covered with an enamel layer, or generally with an anticorrosive layer.

### List of reference numerals

- 1: multi-component part
- 2: first component
- 3: second component
- 4: first substance-to-substance bond
- 5: first side
- 6: first bonding area
- 7.1, 7.2: metal layer
- 8: gap
- 9: coating area
- 10: second side
- 11: anticorrosive layer
- 12: second bonding area
- 13: second substance-to-substance bond
- 14: distance
- 15: spacer element
- 16: chamfer
- 17: edge
- 18: bending
- 19: linear metal sheet strip
- 20: washer
- 21: oven cavity
- 22: waveguide section
- 23: waveguide opening
- 24: cavity
- 25: thickness
- 26: fusion zone
- 27: supervision system
- 28: control unit
- 101: kitchen appliance, microwave oven
- 102: cavity
- 103: outer housing
- 104: door
- 105: top wall
- 106: microwave feed-through
- 107: waveguide section
- 108: hollow conductor
- 109: microwave generator
- 110: microwaves
- 111: food
- 112: cooking chamber
- 113: overlap joint
- 114: laser
- 115: edge joint or edge bond

- S1...S4: method steps
- W: width

## Claims

1. A method of manufacturing a multi-component part (1) of a cooking and/or household and/or kitchen appliance, the multi-component part (1) comprising a first component (2) and a second component (3) wherein the first and second components (2, 3) are interconnected by a substance-to-substance bond (4), the method comprising:
a) providing the first component (2), the first component (2) comprising on a first side (5) a first bonding area (6) defined by an overlay of at least two interconnected metal layers (7.1, 7.2) with a gap (8) being provided between the two metal layers (7.1, 7.2) in the first bonding area (6), wherein at least a coating area (9) on a second side (10) of the first component (2) averted from the first side (5) and opposite to the first bonding area (6) is coated with an anticorrosive layer (11), in particular an enamel layer;
b) providing the second component (3), the second component (3) comprising a second bonding area (12);
c) positioning the second bonding area (12) at or on the first bonding area (6); and
d) joining the first and second component (2, 3) by providing a first substance-to-substance bond (4) between the first (6) and second bonding area (12) by applying bonding energy to the first and second bonding areas (6, 12) from the first side (5).

2. The method of claim 1, wherein the step a) of providing the first component (2) comprises:
a1) establishing the first bonding area (6) by interconnecting the two layers (7.1, 7.2) at the first side (5) with a second substance-to-substance bond (13), preferably comprising one or more bonding lines and/or bonding spots, the second substance-to-substance bond (13) established at a distance from the intended location of the first substance-to-substance bond (4), in particular outside the first bonding area (6), and thereafter,
a2) coating the coating area (9) with the anticorrosive layer (11).

3. The method of claim 1 or 2, wherein the gap (8) is an air-gap, and, preferably, has at least in the region of and adjacent to the first boding area (6) a minimal gap height (14), the gap height (14) measured perpendicular to the metal layers (7.1, 7.2) .

4. The method of any of the preceding claims, wherein the gap (8) in the first bonding area (6) is established by means of at least one spacer (15) or spacer section, preferably, located outside the first bonding area (6), the spacer (15) or spacer section keeping at least two consecutive metal layers (7.1, 7.2) of the first bonding area (6) at a distance from each other.

5. The method of claim 4, wherein the spacer (15) or spacer section is provided as at least one of:
- a projection (15), protrusion, or bulge provided on a side of the metal layers (7.1, 7.2) facing each other, wherein the projection (15), protrusion, or bulge is preferably formed integral with one of the metal layers (7.2) ;
- a chamfer (16) provided at an edge (17) of one of the metal layers (7.2) and oriented towards an immediately adjacent metal layer (7.1).

6. The method of any of the preceding claims, wherein the gap (8) is established by a bending (18) of at least one of the layers (7.2), the bending (18) leading to an interspace between at least two consecutive metal layers of the at least two metal layers (7.1, 7.2) in the first bonding area (6).

7. The method of any of the preceding claims, wherein one of the two metal layers (7.1) is provided as a metal sheet, and the other metal layer (7.2) provided immediately adjacent to the metal sheet (7.1) on the first side (5) is formed as a linear (19), curved (20), in particular circular, sheet metal band, in particular a sheet strip or washer (20), and wherein the first bonding area (6) is provided on or at the sheet metal band.

8. The method of any of the preceding claims, comprising, before joining the first and second component (2, 3), cleaning at least one of the first and second bonding area (6, 12) substantially to bare metal, the cleaning preferably carried out with a contactless cleaning tool and/or a contact-based cleaning tool; the contactless cleaning tool preferably comprising a laser source for generating a laser beam and the cleaning comprising irradiating the first and/or second bonding area with the laser beam; the contact-based cleaning tool preferably comprising an abrading, grinding and/or blasting tool.

9. The method of any of the preceding claims, the first component (2) being a part of a cavity (7.1, 21) or frame of a household and/or kitchen appliance, and the second component (3) being a functional component (22) for mounting to the cavity or frame.

10. The method of claim 9, the cavity (21) configured for heating objects via high-frequency radiation, such as radio-frequency and/or microwave radiation, the functional component (3) being a waveguide section (22), the cavity (21) comprising a cavity wall with a waveguide opening (23) for feeding therethrough high frequency radiation in the radio-frequency and/or microwave range supplied via the waveguide section (22) attached to the cavity wall (7.1) into the cavity (21), wherein the first bonding area (6) is established on an outer side (24) around the waveguide opening (23), and the second bonding area (12) being established at the waveguide section (22), and adjoining the waveguide opening (23) once connected to the cavity wall (7.1), the method comprising:
a) positioning the waveguide section (22) at the waveguide opening (23) with the second bonding area (12) of the waveguide section (22) being placed in alignment with the first bonding area (6); and
b) establishing the substance-to-substance bond (4) between the first and second bonding areas (6, 12).

11. The method of any of the preceding claims, wherein the thickness (25) of the first component (2) in the region of the overlay is in the range between 0.8mm and 2.0mm, preferably from 1.3 to 1.4 mm, and the thickness of the first component outside the overlay is, preferably, in the range between 0.3mm to 1.0mm, preferably from 0.5 mm to 0.6 mm.

12. The method of any of the preceding claims, wherein a width (W) of the first bonding area (6) when measured perpendicular to its path on first component (2) and parallel to the overlay is substantially constant, and, preferably, has a width in the range from 0.5 cm to 2.0 cm, specifically in the range from 0.8cm to 1.5 cm, more specifically of about 1.0 cm.

13. The method of any of the preceding claims, wherein the substance-to-substance bond (4) is established by a contact-based joining technique such as brazing or welding and/or a contactless joining technique, such as laser welding or laser brazing.

14. The method according to one or more of the preceding claims, comprising supervising at least one of the method steps by a computer-based supervision system (27, 28), the supervision system (27, 28) comprising a control unit (28) for controlling in an at least semi-automated manner, at least one of the positioning of the second bonding area (12) at or on the first bonding area (6), the cleaning of the first and/or second bonding area (6, 12), and the joining of the first and second component (2, 3), wherein the supervising system (27, 28) preferably comprises a visual system (27), preferably comprising a camera tracking module (27), for visually inspecting the operation according to at least one of the method steps.

15. Household or kitchen appliance (101), in particular cooking appliance (101) such as a cooking oven for cooking food (111), comprising a multi-component part (1) manufactured according to a method of any of claims 1 to 14.

16. Household or kitchen appliance (101), in particular cooking appliance (101), comprising an cavity (102, 21) and/or frame, and a functional component (107, 22), the cavity (102, 21) and/or frame, and the functional component (107, 22) interconnected via a substance-to-substance joint (4, 13) obtained according to a method according to any of claims 1 to 14; with the cavity (102, 21) and/or frame representing the first component (2), and the functional component (107, 22) representing the second component (3); the appliance (101) preferably comprising one or more heating sources, one of the heating sources preferably being a radiation source (109) for emitting high frequency radiation in the radio-frequency or microwave range, the functional component (107, 22) preferably being a waveguide section (107, 22) joined via the substance-to-substance joints (4) to the cavity (102, 21) such that radiation emitted from the radiation source is fed via the waveguide section (22) into the cavity (102, 21).
